# EUROPEAN PATENT SPECIFICATION

(11) **EP 1 166 858 B1**
(45) Date of publication and mention of the grant of the patent: **28.03.2007**
(21) Application number: 01115497.8
(22) Date of filing: 27.06.2001
(51) Int. Cl.: B01D 53/94

(54) **Exhaust gas purification catalyst and exhaust gas purification system**
Abgasreinigungskatalysator und Abgasreinigungsanlage
Catalyseur et système pour la purification de gaz d'échappement

(30) Priority: 29.06.2000 JP 2000196220; 16.05.2001 JP 2001145823
(43) Date of publication of application: 02.01.2002
(73) Proprietor: Mazda Motor Corporation, Aki-gun, Hiroshima 730-8670 (JP)
(72) Inventor: Okamoto, Kenji, Aki-gun, Hiroshima 735-8670 (JP); Yamada, Hiroshi, Aki-gun, Hiroshima 735-8670 (JP); Miyoshi, Seiji, Aki-gun, Hiroshima 735-8670 (JP); Takami, Akihide, Aki-gun, Hiroshima 735-8670 (JP); Yamamoto, Kenichi, Aki-gun, Hiroshima 735-8670 (JP); Sumida, Hirosuke, Aki-gun, Hiroshima 735-8670 (JP)
(74) Representative: Laufhütte, Dieter

(56) References cited:
- EP-A- 0 507 590
- EP-A- 0 613 714
- EP-A- 0 666 103
- EP-A- 0 885 650
- EP-A- 0 896 134
- EP-A- 0 988 890

## Description

### BACKGROUND OF THE INVENTION

This invention relates to a catalyst for exhaust gas purification. The present invention also relates to an exhaust gas purification system.

For the catalyst of purifying engine exhaust gases, a so-called lean NOₓ purification catalyst has been known. In an excess oxygen environment of high exhaust gas oxygen concentration level (during lean burn operation), such a catalyst, more specifically its NOₓ absorbent material such as Ba, absorbs exhaust gas NOₓ. When the exhaust gas oxygen concentration level becomes lower (during stoichiometric air/fuel ratio operation or rich burn operation), the absorbed NOₓ is released and travels onto a precious metal. The NOₓ is reacted with a reducing gas (HC, CO or H₂) present in the exhaust gas for N₂ reduction and purification. HC or CO, i.e., the reducing gas, is also oxidized and purified.

Moreover, there is known another type of lean NOₓ purification catalyst which includes an oxygen storage material capable of changing its oxidation number so that it stores and releases oxygen. The oxygen storage material has mainly been utilized as oxygen supply source for oxidizing NO, which is present in the exhaust gas in a large amount, into NO₂ capable of being absorbed easily into the oxygen storage material.

For the oxygen storage material of the type described above, CeO₂ and Ce-Zr mixed oxide are disclosed in Japanese Unexamined Patent Gazette No. H09-928.

Further, the following is stated in Japanese Unexamined Patent Gazette No. H09-313939. More specifically, in an engine which is controlled such that the air/fuel ratio repeats reversing in the range of below ± 1.0 (A/F = 13.7 to 15.7) with respect to a stoichiometric air/fuel ratio (A/F = 14.7), Pd as a catalyst component, cerium oxide as a co-catalyst, and a Ce-Pr mixed oxide are supported, as a so-called "three-way" catalyst, on a honeycomb substrate, for enhancing the activity of the Pd catalyst component as a catalyst at high temperatures by the cerium oxide co-catalyst and the Ce-Pr mixed oxide.

EP-A-896134 discloses an exhaust gas catalyst comprising a NOₓ absorbent material, a precious metal and an oxide absorbing material and further discloses that a Ce-Pr mixed oxide is available as the oxide absorbing material. However, thins document suggests that the NOₓ absorbent material cannot be supported on an oxide absorbent material such as Ce-Pr and further fails to disclose desirable amounts to add the Ce-Pr mixed oxide.

### SUMMARY OF THE INVENTION

In view of the above, an object of the present invention is to enhance the NOₓ absorption efficiency of a NOₓ absorbent material, i.e., the lean NOₓ purification rate, in an environment of excess oxygen of high-level exhaust gas oxygen concentration while achieving an improvement in total exhaust gas purification efficiency, by providing an improved oxygen storage material in the lean NOx purification catalyst.

This object is met by an exhaust gas purification catalyst according to claim 1, comprising a NOₓ absorbent material, a precious metal, and a Ce-Pr mixed oxide wherein said Ce-Pr mixed oxide is present in amounts ranging from 15 g to 300 g per 11 of a substrate, and at least a part of said NOₓ absorbent material is supported on said Ce-Pr mixed oxide.

In a further development of the gas purification catalyst of the present invention, said NOₓ absorbent material is formed of at least one of Ba, K, Sr and Mg.

The present invention was made by directing attention to the fact that the NOₓ purification rate in an excess oxygen environment of high exhaust gas oxygen concentration level has a proportional relationship to the HC purification rate when the exhaust gas oxygen concentration level becomes lower, and an oxygen storage material capable of demonstrating high oxygen release efficiency when the exhaust gas oxygen concentration level becomes lower in a given temperature range, is contained in a catalyst component for speeding up HC oxidation (partial oxidation) reactions.

Further, the present invention was made based on the finding that if the ionization potential of a NOₓ absorbent material is increased this enhances its NOₓ absorption efficiency.

More specifically, the present invention provides a catalyst for exhaust gas purification which comprises (a) a NOₓ absorbent material which absorbs NOₓ in an exhaust gas in an environment of excess oxygen whose exhaust gas oxygen concentration level is high, whereas, when the exhaust gas oxygen concentration level becomes lower in a given temperature range, the NOₓ absorbent material releases the absorbed NOₓ and (b) a precious metal, wherein the exhaust gas purification catalyst further comprises an oxygen storage material which releases a larger amount of oxygen in the given temperature range in comparison with other temperature ranges.

In accordance with the above arrangement, the HC purification rate when the exhaust gas oxygen concentration level becomes lower in the given temperature range becomes excellent and so does the NOₓ purification rate in a high exhaust gas oxygen concentration level, excess oxygen environment, thereby achieving an extremely excellent exhaust gas purification efficiency. Although the reason for such is not necessarily clear, a conceivable explanation may be that, when the exhaust gas oxygen concentration level becomes lower in the given temperature range, the NOₓ release action of the NOₓ absorbent material appears significantly and the oxygen release efficiency of the oxygen storage material works greatly.

The following series of reactions progresses smoothly. That is, when the exhaust gas oxygen concentration level becomes lower in the given temperature range, the oxygen storage material actively releases the absorbed and stored oxygen as active oxygen of high activity. HC in the exhaust gas is partially oxidized by the active oxygen and enters an unstable state, or is activated. And, there occurs an oxidation-reduction reaction between the partially oxidized HC and NOₓ released from the NOₓ absorbent material. As a result of such a series of reactions, the HC purification rate increases and the NOₓ absorbent material recovers its NOₓ absorption capability because of consumption of the absorbed NOₓ. This supposedly enhances the NOₓ purification rate (the lean NOₓ purification rate) in an environment of excess oxygen of high exhaust gas oxygen concentration level, resulting in achieving an improvement in total exhaust gas purification efficiency.

By "given temperature range" here is meant a temperature range within which the NOₓ absorbent material releases NOₓ when the exhaust gas oxygen concentration level becomes lower, such as during stoichiometric air/fuel ratio burn operation or rich burn operation (i.e., when the exhaust gas oxygen concentration level falls below 2%, preferably 0.5%). For the case of gasoline engines, the given temperature range is from 300 to 500 degrees centigrade.

The use of an oxygen storage material whose temperature, at which its oxygen release amount increases to a maximum, lies within the aforesaid given temperature range, makes it possible to take maximum advantage of the oxygen release capability of the oxygen storage material. Therefore, the foregoing action is effectively made.

Further, if a Ce-Pr oxide (an oxide containing Ce and Pr ions) capable of actively releasing oxygen in the temperature range of 300 to 500 degrees centigrade, especially a Ce-Pr mixed oxide (a mixed oxide containing Ce and Pr ions), is used as an oxygen storage material, this further enhances the lean NOₓ purification rate.

Further, in the case the oxygen storage material is supported on a substrate, if the oxygen storage material is present in amounts ranging from 15 to 300g per 1L of the substrate, this will further improve the lean NOₓ purification rate. That is, if such a support amount falls below 15g per 1L of the substrate, then the amount of oxygen that the oxygen storage material can release will diminish. Therefore, it is difficult to obtain expected effects. On the other hand, if the support amount is increased above 300g per 1L of the substrate, this increases the entire catalyst volume, and the fabrication of catalysts becomes difficult to perform.

It is preferred that at least a part of the NOₓ absorbent material be supported on the oxygen storage material. That is, as described above, the oxygen storage material releases oxygen by which HC in the exhaust gas is made active, and if the NOₓ absorbent material is supported on the oxygen storage material, this causes HC which has become active on the oxygen storage material to react easily with NOₓ released from the NOₓ absorbent material, thereby providing an advantage to NOₓ reduction and HC oxidation.

Further, the present invention provides a concrete arrangement embodied as a catalyst for exhaust gas purification, the exhaust gas purification catalyst comprising (a) a NOₓ absorbent material which is placed in an exhaust gas alternating between a first period (one to five minutes) during which the exhaust gas oxygen concentration level becomes relatively high (4% or above) and a second period (one to ten seconds) during which the exhaust gas oxygen concentration level becomes relatively low (2% or below) and which is formed of at least one of Ba, K, Sr, and Mg and (b) a precious metal. The exhaust gas purification catalyst further comprises a Ce-Pr mixed oxide.

Furthermore, the present invention provides a catalyst for exhaust gas purification not forming part of the scope of protection of the present application placed in an exhaust passage of an engine and comprising (a) a NOₓ absorbent material which absorbs, when the oxygen concentration level of an exhaust gas from the engine is high, NOₓ in the exhaust gas, whereas, when the oxygen concentration level becomes lower, the NOₓ absorbent material releases the absorbed NOₓ and (b) a precious metal, wherein the exhaust gas purification catalyst further comprises an oxygen storage material which enhances the ionization potential of the NOₓ absorbent material.

That is, that the oxygen storage material enhances the ionization potential of the NOₓ absorbent material means placing the NOₓ absorbent material in a state in which the energy required to remove an electron (i.e., the energy required to be an positive ion) is high. In other words, electrons of the NOₓ absorbent material are drawn toward the oxygen storage material and placed in a state in which they are positively charged to a further extent than when the NOₓ absorbent material exists alone. For example, if barium carbonate is used as a NOₓ absorbent material, this means that the degree at which Ba of the barium carbonate is charged positively increases.

The following can possibly be thought of as a mechanism of exhaust gas NOₓ absorption by the NOₓ absorbent material. This is shown using barium carbonate as an example.

### MECHANISM (1) -CONSECUTIVE REACTION

NO + O₂ → NO₂ (1)-1(factor omitted)

BaCO₃ + 2NO₂ + O₂ → Ba(NO₃)₂ + CO₂ (1)-2(factor omitted)

That is, in the mechanism (1), the (1)-1 reaction takes place on the precious metal and the resulting NO₂ is absorbed into the NOₓ absorbent material by the (1)-2 reaction. Accordingly, the condition that the oxygen storage material is one capable of facilitating either the (1)-1 reaction or the (1)-2 reaction and the condition that NO₂ is higher in presence ratio than NO in a temperature range within which NO in the exhaust gas is absorbed into the NOₓ absorbent material (in other words the temperature range within which NO₂ is allowed to exist in a stable manner), are preferable conditions for NO absorption by the present mechanism.

However, the inventors of the present invention found that, even when such conditions failed to hold, if the oxygen storage material was one capable of enhancing the ionization potential of the NOₓ absorbent material, this enhanced the NOₓ absorbability and improved the NOₓ purification rate. Accordingly, it is necessary to consider another NO absorption mechanism different from the mechanism (1) which is the following mechanism (2).

### MECHANISM (2) - REACTIVE INTERMEDIATE SPILLOVER

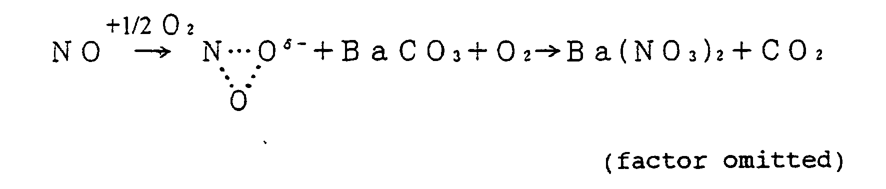

That is, in the mechanism (2), NO₂^{δ-}, which is a reactive intermediate, is generated on the precious metal and this reactive intermediate travels (spills over) onto the NOₓ absorbent material and are absorbed thereinto.

For the case of the mechanism (2), the condition of causing the reaction to effectively progress is that the NOₓ absorbent material functions so as to attract the negatively-charged reactive intermediate (short lived intermediate) overlying the precious metal. In view of this point, for the case of the oxygen storage material capable of enhancing the ionization potential of the NOₓ absorbent material, the NOₓ absorbent material is positively charged to a further extent than when the NOₓ absorbent material exists alone. Therefore, the reactive intermediate is drawn from on the precious metal to the NOₓ absorbent material and easily spills over. As a result, the NO absorbability of the NOₓ absorbent material is enhanced and the NOₓ purification rate is improved.

In this case, it is preferred that at least a part of the NOₓ absorbent material be supported on the oxygen storage material capable of enhancing the ionization potential of the NOₓ absorbent material. Such arrangement enables the oxygen storage material to serve effectively as a catalyst component capable of intensely and positively charging the NOₓ absorbent material supported on the oxygen storage material. As such an oxygen storage material, oxides containing Ce an Pr ions are effective. A Ce-Pr mixed oxide is especially preferable.

As a concrete arrangement for an exhaust gas purification system not forming part of the scope of protection of the present application inwhich the mechanism (2) works, there is given a catalyst for exhaust gas purification including (a) a NOₓ absorbent material which absorbs, when the oxygen concentration level of an exhaust gas is high, NOₓ in the exhaust gas, whereas, when the oxygen concentration level becomes lower, the NOₓ absorbent material releases the absorbed NOₓ, a precious metal, and an oxygen storage material which enhances the ionization potential of the NOₓ absorbent material and (b) an oxygen concentration level control means for changing the oxygen concentration level of the exhaust gas so that a first period during which the NOₓ absorbent material absorbs the NOₓ as the oxygen concentration level of the exhaust gas becomes higher alternates with a second period during which the NOₓ absorbent material releases the absorbed NOₓ as the oxygen concentration level becomes lower, and that the second period is shorter than the first period.

There are other compounds besides the foregoing Ce-Pr mixed oxide which also exhibit the same action that the Ce-Pr mixed oxide does, such as a Ce-Tb oxide and a Ce-Tb mixed oxide using Tb capable of assuming an oxidation state of +III and +IV like Pr.

As described above, in the present invention, the oxygen storage material is provided whose oxygen release capability increases beyond a given degree in a given temperature range within which the NOₓ absorbent material releases NOₓ. HC is partially oxidized by oxygen released from the oxygen storage material, thereby making it possible to cause an oxidation-reduction reaction to take place between the partially-oxidized HC and NOₓ released from the NOₓ absorbent material. As a result, the HC purification rate is improved and the NOₓ absorbent material recovers its NOₓ absorbability, and NOₓ purification during air/fuel ratio lean operation becomes excellent. This makes the total exhaust gas purification efficiency extremely excellent.

Further, in the present invention, the oxygen storage material capable of enhancing the ionization potential of the NOₓ absorbent material is provided, contributing to NOₓ absorbability improvement. This provides an advantage to NOₓ purification.

### BRIEF DESCRIPTION OF THE DRAWINGS

Figure **1** shows in cross section a layer structure of a catalyst C according to an embodiment of the present invention.
Figure **2** shows in block form an engine exhaust gas purification system employing the catalyst C of the embodiment of the present invention.
Figure **3** graphically shows a relationship between the lean NOₓ purification rate and the rich HC purification rate in Evaluation Test 1.
Figure **4** graphically shows a relationship between the temperature of each mixed oxide and the CO₂ amount in Evaluation Test 2.
Figure **5** graphically shows the lean NOₓ purification rates and the rich HC purification rates of catalysts according to Examples 1 through 4 in Evaluation Test 2.
Figure **6** graphically shows the specific surfaces of fresh and post-heat treatment mixed oxides in Evaluation Test 2.
Figure **7** is an explanatory view showing a state of an oxidation-reduction reaction on a catalyst surface when an air/fuel ratio rich, simulated exhaust gas is flowing.
Figure **8** graphically shows the lean NOₓ purification rates of catalysts of Examples 5 through 11 in Evaluation Test 3 for 60 seconds after the operation was switched to lean operation.
Figure **9** graphically shows the lean NOₓ purification rates of the EXAMPLES 5 through 11 catalysts in Evaluation Test 3 for 130 seconds after the operation was switched to lean operation.
Figure **10** graphically shows the lean NOₓ purification rates and the NO → NO₂ conversion rates (which are results of Evaluation Test 4) of catalysts, one of which employs a Ce-Pr mixed oxide as an oxygen storage material and the other of which employs a Ce-Zr mixed oxide as an oxygen storage material.
Figure **11** graphically shows the lean NOₓ purification rates and the NO₂ purification rates (which are results of Evaluation Test 5) of catalysts, one of which employs a Ce-Pr mixed oxide as an oxygen storage material and the other of which employs a Ce-Zr mixed oxide as an oxygen storage material.
Figure **12** graphically shows temperature characteristics (which are results of Evaluation Test 6) for the presence ratio of NO and NO₂.
Figure **13** graphically shows temperature characteristics (which are results of Evaluation Test 7) for the lean NOₓ purification rates of catalysts, one of which employs a Ce-Pr mixed oxide as an oxygen storage material and the other of which employs a Ce-Zr mixed oxide as an oxygen storage material.
Figure **14** is a diagram graphically making comparison, in Ba-atom ionization potential, between Ba/Ce-Pr resulting from supporting BaCO₃ on a Ce-Pr mixed oxide and Ba/Ce-Zr resulting from supporting BaCO₃ on a Ce-Zr mixed oxide, illustrating results of Evaluation Test 8.
Figure **15** shows NOₓ absorption models by a mechanism (2) for catalysts, one of which employs a Ce-Pr mixed oxide as an oxygen storage material (Figure 15A) and the other of which employs a Ce-Zr mixed oxide as an oxygen storage material (Figure **15B**).
Figure **16** graphically shows temperature characteristics for the NO absorption capacities of catalysts, one of which employs a Ce-Pr mixed oxide as an oxygen storage material and the other of which employs a Ce-Zr mixed oxide as an oxygen storage material.

### DESCRIPTION OF PREFERRED EMBODIMENTS

Hereinafter, the present invention will be described in detail with reference to the accompanying drawings.

### CATALYST STRUCTURE

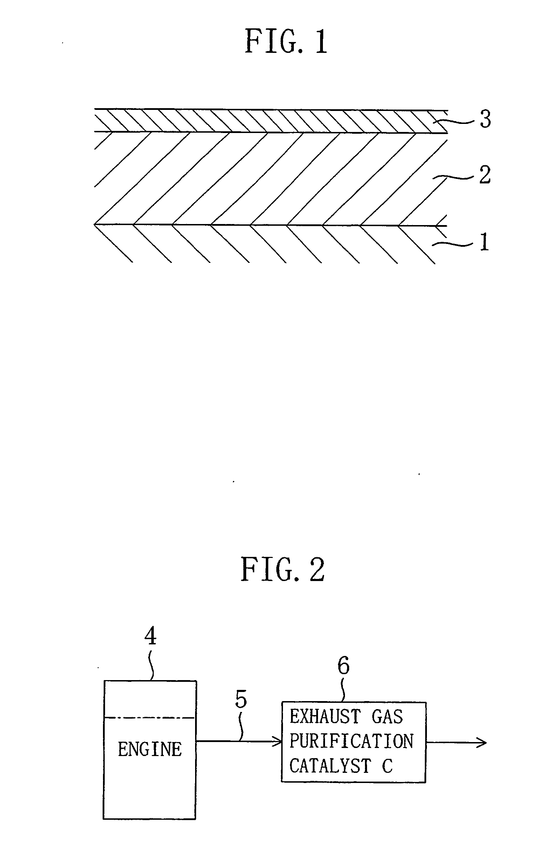

Figure **1** shows a structure of a catalyst C for exhaust gas purification according to an embodiment of the present invention. The catalyst C comprises a monolith-like honeycomb substrate **1** formed of a substrate material superior in heat resistance such as a cordierite. Layered on the substrate **1** are an inner catalytic layer **2** and then an outer catalytic layer **3**. More specifically, the layer **2** is located on the nearer side to a surface (a porous wall surface) of the substrate **1** while the layer **3** overlying the layer **2** is located farther from the surface of the substrate **1**.

The inner catalytic layer **2** is made up of a first precious metal (for example, Pt, Rh), a NOₓ absorbent material (for example, Ba, K, Mg, Sr), a first support on which the first precious metal and the NOₓ absorbent material are supported, and a binder by which the particles of the first support cohere together and are held on the substrate **1**. The first support is a mixture of alumina and a Ce-Pr mixed oxide serving as an oxygen storage material. Further, the Ce-Pr mixed oxide is present in amounts ranging from 15 to 300g per 1L of the substrate.

The outer catalytic layer **3** is made up of a second precious metal (for example, Pt, Rh), a NOₓ absorbent material (for example, Ba, K, Mg, Sr), a second support on which the second precious metal and the NOₓ absorbent material are supported, and a binder by which the particles of the second support cohere together and are held on the substrate. The second support is a zeolite.

The impurity percentage in each of the catalytic layers **2** and **3** is not more than 1%.

### MANUFACTURING PROCESS OF CATALYST C

A basic manufacturing process of the catalyst C is shown below.

First of all, a first support (which is a mixture of alumina and Ce-Pr mixed oxide), a binder, and water are mixed together to prepare a slurry. This slurry is washcoated on a monolith substrate and then subjected to drying and baking to form an inner coat layer. At this time, the first support is prepared such that the inner coat layer contains a Ce-Pr mixed oxide in amounts ranging from 15 to 300g per 1L of the substrate.

Next, a second precious metal is supported on a second support (zeolite) by dryness means etc. to form catalytic powders. And the catalytic powders, a binder, and water are mixed together to form a slurry. This slurry is washcoated on the monolith substrate onto which the inner coat layer has been applied and subjected to drying and baking to form an outer coat layer on the inner coat layer.

Thereafter a mixture of a solution of the first precious metal (Pt, Rh) and a solution of each of Ba, K, Sr, Mg constituting a NOₓ absorbent material is prepared. And, this mixed solution is impregnated into the inner coat layer and into the outer coat layers at the same time and then drying treatment and baking treatment are carried out.

In the way as described above, the inner coat layer is formed on the inner catalytic layer and the outer coat layer is formed on the outer catalytic layer, whereby the double-coated catalyst C is manufactured.

### USE MANNER OF CATALYST C

For example, as shown in Figure **2**, the catalyst C is disposed in an exhaust passageway **5** through which exhaust gasses from a vehicle lean burn engine **4** are expelled. The position where the catalyst C is disposed is located below the vehicle engine. Alternatively, the catalyst C may be disposed at a position directly downstream of the exhaust manifold. In the catalyst C, its NOₓ absorbent material (Ba, K, Sr, Mg) absorbs NOₓ contained in the exhaust gas during lean burn operation. On the other hand, during burn operation either in the vicinity of a stoichiometric air/fuel ratio or at an excess air ratio of λ ≤ 1 (which is hereinafter called a "rich burn operation"), NOₓ released from the NOₓ absorbent material is reacted with HC, CO, or H₂ so that exhaust gas purification is achieved, as in a three-way catalyst. That is, the catalyst C has a lean NOₓ purification function.

During the lean burn operation, the exhaust gas oxygen concentration level ranges, for example, between 4-5% and 20% and the air/fuel ratio is A/F = 16 to 22 or A/F = 18 to 50. On the other hand, during the rich burn operation, the exhaust gas oxygen concentration level is 2% or below or 0.5% or below.

Further, although the catalyst C has a lean NOₓ purification function as described above, its NOₓ absorption amount will become saturated if the lean burn operation continues for a long period of time, therefore giving rise to the drop in NOₓ purification efficiency. To cope with this problem, the present embodiment is equipped with an oxygen concentration level control means (an engine air/fuel ratio control means) so as to timely prompt NOₓ release. More specifically, by virtue of the provision of the oxygen concentration level control means, a condition of high oxygen concentration level and a condition of low oxygen concentration level take place alternately, in other words, there are provided two different periods and in the first period the lean burn operation is carried out so that the exhaust gas oxygen concentration level is made high whereas in the second period shorter than the first period the rich burn operation is carried out so that the exhaust gas oxygen concentration level is made relatively low.

A first manner of the oxygen concentration level control means is to estimate a NOₓ absorption amount of the catalyst C and to make a change in exhaust gas oxygen concentration level. That is, based on the mileage since the oxygen concentration level control means last performed its NOₓ release control, the total amount of fuel consumed during such a period etc., the oxygen concentration level control means estimates a NOₓ absorption amount of the catalyst C and then decides whether the estimated NOₓ absorption amount exceeds a predefined, specified value (i.e., whether the catalyst C is in the excess NOₓ absorption state). In other words, the oxygen concentration level control means decides a lapse of the first period. If the estimated NOₓ absorption amount is in excess of the specified value, then the amount of fuel that is fed to the engine is increased thereby to perform the foregoing rich burn operation for from 1 second to 10 seconds (the second period) so that NOₓ absorbed in the NOₓ absorbent material is released.

Moreover, a second manner of the oxygen concentration level control means is to perform control so that during engine steady operation the first period of carrying out the lean burn operation and the second period of carrying out the rich burn operation alternate periodically. In this case, for example, it is possible that the first period ranges between one minute and five minutes whereas the second period ranges between one second and ten seconds.

Further, an alternative arrangement may be made in which the lean burn operation is performed during engine steady operation while during acceleration operation the rich burn operation is performed, whereby NOₓ absorbed in the NOₓ absorbent material is released.

### ACTION AND EFFECTS

In accordance with the catalyst C described above, Ce-Pr mixed oxide as an oxygen storage material is present in the inner catalytic layer and therefore the HC purification rate during the rich burn operation becomes excellent and, in addition, the NOₓ purification rate during the lean burn operation also becomes excellent, as a result of which the total exhaust gas purification efficiency becomes extremely excellent. The reason may be explained as follows. That is, generally during the rich burn operation (i.e., in a temperature range between 300 and 500 degrees centigrade where the exhaust gas oxygen concentration level becomes lower and the action of releasing NOₓ from the NOₓ absorbent material becomes active), the Ce-Pr mixed oxide is thought to release active oxygen actively.

That is, if the exhaust gas oxygen concentration level becomes lower in a range of temperatures between 300 and 500 degrees centigrade, the Ce-Pr mixed oxide serving as an oxygen storage material actively releases its stored oxygen in the form of active oxygen. HC is partially oxidized by the active oxygen, being placed in an unsteady state and made active. Then, there occurs an oxidation-reduction reaction between the partially oxidized HC and NOₓ released from the NOₓ absorbent material (Ba etc.). Such a series of reactions progresses smoothly. This improves the HC purification rate and the NOₓ absorbent material recovers its NOₓ absorption capability by releasing NOₓ absorbed therein. This therefore enhances the NOₓ purification rate (the lean NOₓ purification rate) in an environment of excess oxygen of high exhaust gas oxygen concentration level. This supposedly accomplishes an improvement in total exhaust gas purification efficiency.

Further, the above are the action and effects of the Ce-Pr mixed oxide when NOₓ is released from the NOₓ absorbent material. In addition, the Ce-Pr mixed oxide has a function of aiding the NOₓ absorbent material to absorb NOₓ.

That is, as described previously, there are two mechanisms that can be thought of as a mechanism by which exhaust gas NO is absorbed into the NOₓ absorbent material. One of the mechanisms is Mechanism (1) (consecutive reaction) in which the reaction of the foregoing (1)-1 formula occurs on a precious metal and NO₂ generated is absorbed into the NOₓ absorbent material by the reaction of the foregoing (1)-2 formula. The other mechanism is Mechanism (2) (reactive intermediate's spillover) in which there is produced a reactive intermediate NO₂^{δ-} on a precious metal as expressed in the foregoing formula (2) and the reactive intermediate NO₂^{δ-} travels or spills over onto the NOₓ absorbent material and is absorbed thereinto.

With respect to the above, the Ce-Pr mixed oxide has a function of enhancing the ionization potential of the NOₓ absorbent material, so that the NOₓ absorbent material is placed in a state in which it is positively charged to a further extent than when existing alone. Accordingly, the reactive intermediate NO₂^{δ-} of the formula (2) is attracted toward the NOₓ absorbent material to be spilled over easily, thereby enhancing the NOₓ absorbability of the NOₓ absorbent material. As a result, the lean NOₓ purification rate is improved.

Moreover, the Ce-Pr mixed oxide is present in amounts ranging from 15 to 300g per 1L of the substrate, so that the above-described action is effectively carried out, and it is possible to obtain a satisfactory lean NOₓ purification efficiency.

### OTHER EMBODIMENTS

In the above-described embodiment, the catalyst C is implemented by a double-coated catalyst having an inner and an outer catalytic layer. However, the catalyst C may be implemented alternatively by a single-coated catalyst with a single catalytic layer formed on a substrate. Such a single-coated catalyst can be fabricated by performing the following steps. A support (which is a mixture of alumina and Ce-Pr mixed oxide mixture), a binder, and water are mixed together to form a slurry. This slurry is washcoated on a monolith substrate and then subjected to drying and baking to form a coat layer. This is followed by preparation of a mixed solution of a precious metal solution and each NOₓ absorbent material solution. The mixed solution is impregnated into the coat layer and dried and baked, whereby the single-coated catalyst is manufactured.

In the above-described embodiment, the description has been made in terms of engines operating on gasoline. However, the catalyst C is applicable also to diesel engines. And, in such a case, NOₓ release level control may be carried out as follows. That is, if it is decided that a NOₓ absorption amount of the NOₓ absorbent material exceeds a specified level, then main fuel injection is performed in the vicinity of a top dead center of the compression stroke and thereafter secondary fuel injection is performed either at the expansion stroke or at the exhaust stroke thereby to increase the amount of exhaust gas HC for speeding up NOₓ release from the NOₓ absorbent material.

Hereinafter, the above-described action and effects will be proved by way of concrete examples.

### EVALUATION TEST 1

The relationship between lean NOₓ purification rate and HC purification was examined in detail by testing.

### TEST CATALYST

Six different types of NOₓ purification catalysts were prepared by the combination of precious metal such as Pt, NOₓ absorbent material such as Ba, and oxygen storage material such as CeO₂ and Ce-Zr mixed oxide.

### EVALUATION METHOD

### MEASUREMENT OF LEAN NOₓ PURIFICATION RATE

Each of the catalysts was subjected to heat treatment at 900 degrees centigrade for 24 hours in an atmospheric environment.

Thereafter, each catalyst was attached to a fixed-bed flow reactor. An air/fuel ratio lean, simulated exhaust gas (Gas Composition *A*) was let to flow for 60 seconds. Next, the gas composition was changed to an air/fuel ratio rich, simulated exhaust gas (Gas Composition *B*) and it was let to flow for 60 seconds. Such a cycle was repeated five times. Thereafter, the gas composition was changed to an air/fuel ratio lean, simulated exhaust gas (Gas composition *A*). The NOₓ purification rate (lean NOₓ purification rate) of each catalyst for 60 seconds from the moment such a gas composition change was made was measured. The catalyst temperature and the simulated exhaust gas temperature were 350 degrees centigrade and the gas compositions *A* and *B* are shown in Table **1** and the space velocity *SV* was 25000 h⁻¹.

**TABLE 1**

| | GAS COMPOSITION *A* | GAS COMPOSITION *B* |
|---|---|---|
| | LEAN (A/F = 22) | RICH (A/F = 14.5) |
| HC(C₃H₆) | 1333ppm | 1333ppm |
| NO | 260ppm | 260ppm |
| CO | 0.16% | 0.16% |
| CO₂ | 9.75% | 9.75% |
| H₂ | 650ppm | 650ppm |
| O₂ | 7% | 0.5% |
| N₂ | Remains | Remains |

### MEASUREMENT OF RICH HC PURIFICATION RATE

Each of the catalysts was subjected to heat treatment at 900 degrees centigrade for 24 hours in an atmospheric environment.

Thereafter, each catalyst was attached to a fixed-bed flow reactor. An air/fuel ratio lean, simulated exhaust gas (Gas Composition *A*) was let to flow for 60 seconds. Next, the gas composition was changed to an air/fuel ratio rich, simulated exhaust gas (Gas Composition *B*) and it was let to flow for 60 seconds. Such a cycle was repeated five times. The HC purification rate (rich HC purification rate) of the air-fuel ratio rich, simulated exhaust gas for 60 seconds in the fifth cycle, was measured. The catalyst temperature, the simulated exhaust gas temperature, and the space velocity were the same as in the lean NOₓ purification rate measurement method. Further, the gas compositions were the same as shown in Table **1**.

### RESULTS

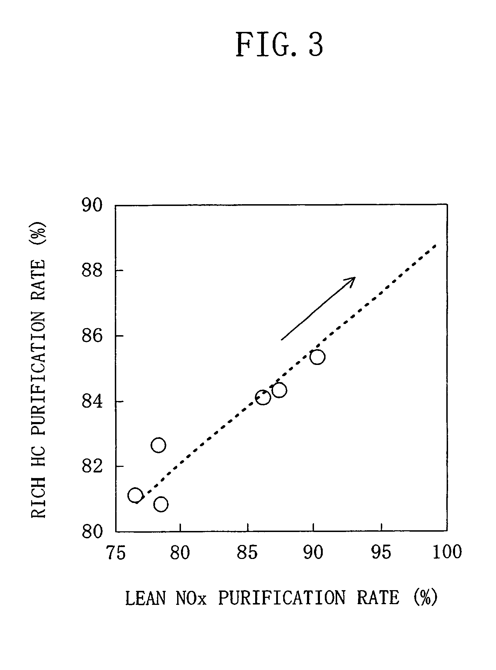

The lean NOₓ purification rates and the rich HC purification rates of the respective catalysts are graphically plotted as shown in Figure **3**, where the lateral axis indicates the former rate whereas the vertical axis indicates the latter rate.

As can bee seen from Figure **3**, the lean NOₓ purification rate has a proportional relationship to the rich HC purification rate. That is, this suggests that it is possible to provide improvement of the lean NOₓ purification rate by enhancement of the rich HC purification rate.

### EVALUATION TEST 2

The oxygen release efficiency and the specific surface of each oxygen storage material and the effect of each oxygen storage material upon the lean NOₓ purification rate and the rich HC purification rate were evaluated.

### TEST CATALYST

### EXAMPLE 1

An Example 1 catalyst was prepared in the following procedure.

### FORMING AN INNER COAT LAYER

A γ-alumina, a Ce-Zr mixed oxide serving as an oxygen storage material (whose mass composition ratio is CeO₂ : ZrO₂ = 74 : 26), and an alumina binder were measured by scale and then mixed together so that the γ-alumina support amount was 150g/L, the Ce-Zr mixed oxide support amount was 150g/L, and the alumina binder support amount was 30g/L (note that the term of the "support amount" means a dry weight per 1L of the substrate when supported on a monolith substrate which is described later). Ion exchange water was added to this mixture to prepare a slurry. A monolith substrate of cordierite was dipped into this slurry and then pulled up. Then, surplus slurry was blown away. In such a way, the slurry was washcoated on the substrate. Next, the slurry was dried at a temperature of 150 degrees centigrade for one hour and then baked at a temperature of 540 degrees centigrade for two hours, to form an inner coat layer. Note that these drying and baking conditions are the same as in "drying" and "baking" in the following description.

### FORMING AN OUTER COAT LAYER

An aqueous solution of dinitrodiammineplatinumnitrate and an aqueous solution of rhodium nitrate were measured by scale and then mixed together so that the Pt support amount was 0.5g/L and the Rh support amount was 0.006g/L. This mixture was added to an MFI type zeolite (SiO₂/Al₂O₃ = 80). Then, a spray dry technique was used to perform evaporation to dryness and drying and baking were carried out to form Pt-Rh/MFI catalytic powders. The amount of Pt and Rh combined was about 2.5% in mass percentage.

Next, the Pt-Rh/MFI catalytic powders and an alumina binder were measured by scale and then mixed together so that the catalytic powder support amount was 20g/L and the binder support amount was 4g/L. Ion exchange water was added to the mixture to prepare a slurry. This slurry was washcoated on the substrate onto which the inner coat layer had been applied and drying and baking were carried out to form an outer coat layer.

### IMPREGNATION STEP

A dinitrodiammineplatinumnitrate aqueous solution, a rhodium acetate aqueous solution, a barium acetate aqueous solution, a potassium acetate aqueous solution, a strontium acetate aqueous solution, and a magnesium acetate aqueous solution were measured by scale and then mixed together so that the Pt support amount was 3g/L, the Rh support amount was 0.1g/L, the Ba support amount was 30g/L, the K support amount was 6g/L, the Sr support amount was 10g/L, and the Mg support amount was 10g/L. In this way, a mixture of these aqueous solutions was prepared.

Next, the mixed solution was impregnated into the inner and outer coat layers of the substrate and drying and baking were carried out.

The impurity amount of the obtained catalyst was below 1%, which was the same as in the following example catalysts.

### EXAMPLE 2

An Example 2 catalyst was prepared by employing the same conditions and methods as in the Example 1, with the exception that a Ce-Zr-Sr mixed oxide (whose mass composition ratio is CeO₂ : ZrO₂ : SrO = 73.3 : 25.7 : 1) was used as an oxygen storage material in the inner coat layer.

### EXAMPLE 3

An Example 3 catalyst was prepared by employing the same conditions and methods as in the Example 1, with the exception that a Ce-Pr mixed oxide (whose mass composition ratio is CeO₂ : Pr₆O₁₁ = 90 : 10) was used as a oxygen storage material in the inner coat layer.

### EXAMPLE 4

An Example 4 catalyst was prepared by employing the same conditions and methods as in the Example 1, with the exception that a mixture, prepared by mixing a Ce-Zr-Sr mixed oxide used in the Example 2 and a Ce-Pr mixed oxide used in the Example 3 at a mass ratio of Ce-Zr-Sr : Ce-Pr = 1 : 5, was used as an oxygen storage material in the inner coat layer.

### EVALUATION METHOD

### OXYGEN EMISSION EFFICIENCY

Each of the mixed oxides (oxygen storage materials) used in the catalysts of the Examples 1 through 4 was subjected to heat treatment at 900 degrees centigrade for 24 hours in an atmospheric environment.

Each of these mixed oxides was subjected to pre-treatment in which they were heated up in a mixed gas of O₂ and He and then cooled. Thereafter, each mixed oxide was again heated up in a mixed gas of CO and He and the amount of CO₂ was measured at different temperatures. The increase in CO₂ amount is caused by oxygen released from each mixed oxide and it is possible to learn, from such a CO₂ amount, the oxygen release efficiency of each mixed oxide.

### LEAN NOₓ PURIFICATION RATE AND RICH HC PURIFICATION RATE

The lean NOₓ purification rate and the rich HC purification rate of the respective catalysts of the Examples 1 through 4 were measured employing the same method as used in the Evaluation Test 1.

### CATALYST SPECIFIC SURFACE BEFORE AND AFTER HEAT TREATMENT

The specific surface of the mixed oxides (oxygen storage materials) used in the catalysts of the Examples 1 through 4 when they were fresh were measured. Their respective specific surfaces after they had undergone heat treatment at 900 degrees centigrade for 24 hours in an atmospheric environment were also measured.

### RESULTS

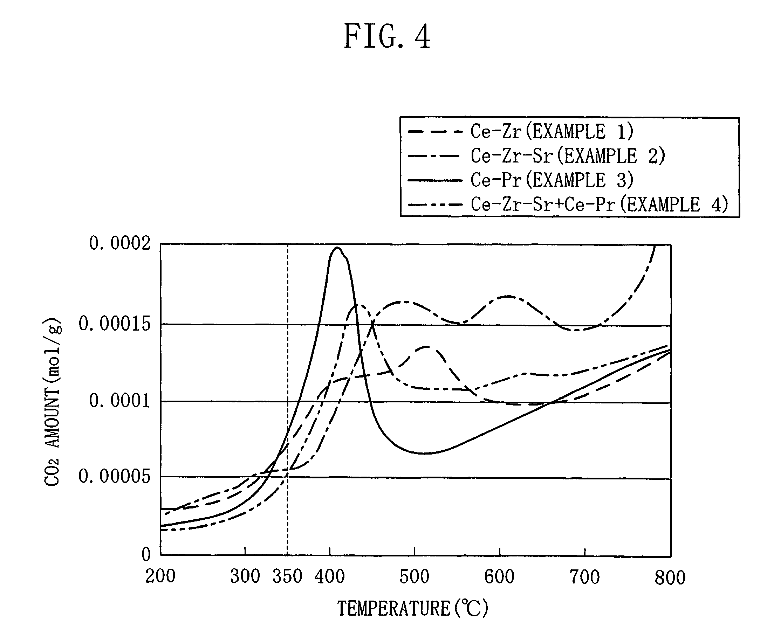

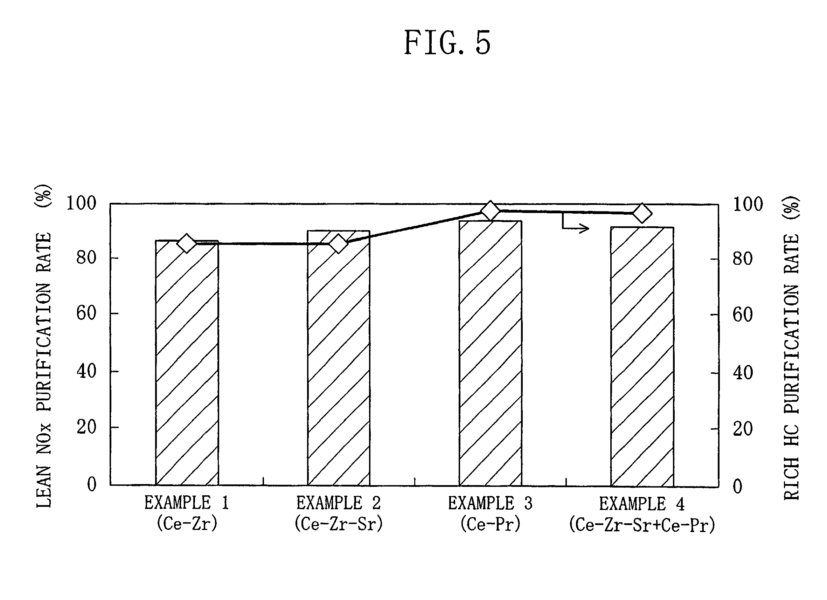

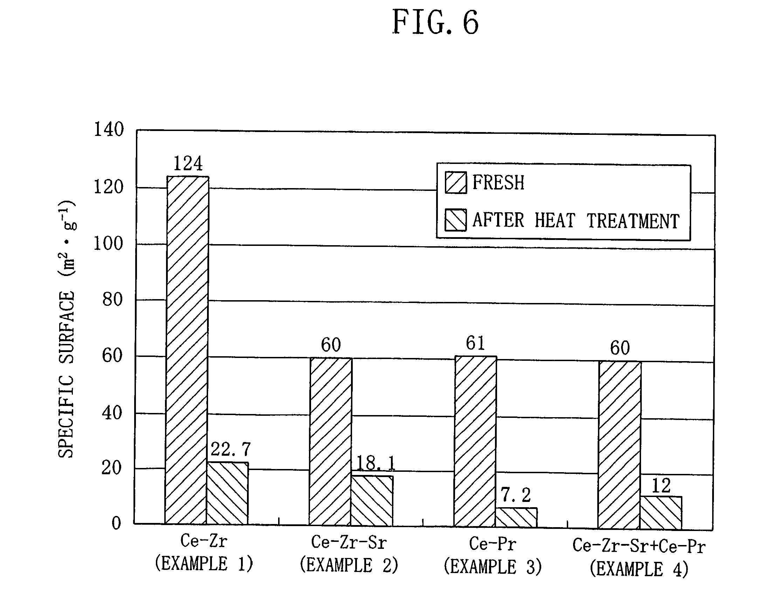

Figure **4** shows a relationship between the temperature and the CO₂ amount for each mixed oxide. Figure **5** shows the lean NOₓ purification rate and the rich HC purification rate of each catalyst. Figure **6** shows the fresh and post-heat treatment specific surfaces of each mixed oxide.

As can be seen from Figure **4**, the Ce-Zr mixed oxide (the Example 1) has a high CO₂ amount (oxygen release amount) region over a wide temperature range from 350 to 550 degrees centigrade and the maximum CO₂ amount lies between 520 and 530 degrees centigrade. The Ce-Zr-Sr mixed oxide (the Example 2) has a high CO₂ amount region over a wide temperature range from 400 to 700 degrees centigrade and there are two extremely great CO₂ amounts, one of which lies between 480 and 490 degrees centigrade and the other of which is at about 600 degrees centigrade. The Ce-Pr mixed oxide (the Example 3) has a high CO₂ amount region over a wide temperature range from 350 to 450 degrees centigrade and the maximum CO₂ amount is at about 400 degrees centigrade whose value is higher than any other maximum and extremely great CO₂ amounts. The Ce-Zr-Sr mixed oxide/Ce-Pr mixed oxide mixture (the Example 4) has a high CO₂ amount region over a wide temperature range from 350 to 450 degrees centigrade and the maximum CO₂ amount lies between 410 and 420 degrees centigrade. Accordingly, these examples can be classified into two types by oxygen release efficiency, that is, one without a Pr component (the Examples 1 and 2) and the other with a Pr component (the Examples 3 and 4). The results prove that the former type exhibits excellent oxygen release efficiency in relatively high temperature regions (from 450 to 600 degrees centigrade), whereas the latter type exhibits excellent oxygen release efficiency in relatively low temperature regions (from 350 to 450 degrees centigrade). Accordingly, in normal exhaust gas temperature ranges the Examples 3 and 4 can be said to be superior in oxygen release efficiency.

According to Figure **5,** the lean NOₓ purification rate becomes higher in the order of Example 1, Example 2, Example 4, and Example 3 and the rich HC purification rate also exhibits almost the same tendency. This backs up the results of the Evaluation Test 1 that the lean NOₓ purification rate has a proportional relationship to the rich HC purification rate. Further, the Examples 3 and 4 exhibit higher lean NOₓ purification rates and rich HC purification rates than the Examples 1 and 2, which indicates that there exists a relationship with the oxygen release efficiency shown in Figure **4**. Further, the comparison between the Example 2 and the Example 4 proves that the Example 4 containing a Ce-Pr mixed oxide as an oxygen storage material is higher in lean NOₓ purification rate as well as in rich HC purification rate than the Example 2, thereby further proving that even when a Ce-Pr mixed oxide is used as a part of the mixed oxide its characteristic is exhibited.

According to Figure **6**, the fresh Ce-Zr mixed oxide (the Example 1) has a specific surface more than two times that of the other fresh mixed oxides (the Examples 2 through 4). Moreover, the Ce-Zr-Sr mixed oxide (the Example 2), the Ce-Pr mixed oxide (the Example 3), and the mixture of a Ce-Zr-Sr mixed oxide and a Ce-Pr mixed oxide (the Example 4) in their fresh form have approximately the same specific surface. After the heat treatment, although the specific surface of the Ce-Zr mixed oxide (the Example 1) falls greatly in comparison with the value when it was fresh, its post-heat treatment specific surface still remains greater than the others. Further, the specific surface becomes smaller in the order of the Ce-Zr-Sr mixed oxide (the Example 2), the Ce-Zr-Sr mixed oxide/Ce-Pr mixed oxide mixture (the Example 4), and the Ce-Pr mixed oxide (the Example 3). This proves the following. That is, that the Example 3 remains capable of demonstrating, even after it had undergone heat treatment, high lean NOₓ purification rates, is not attributed to its large specific surface (i.e., its mixed oxide's high heat resistance).

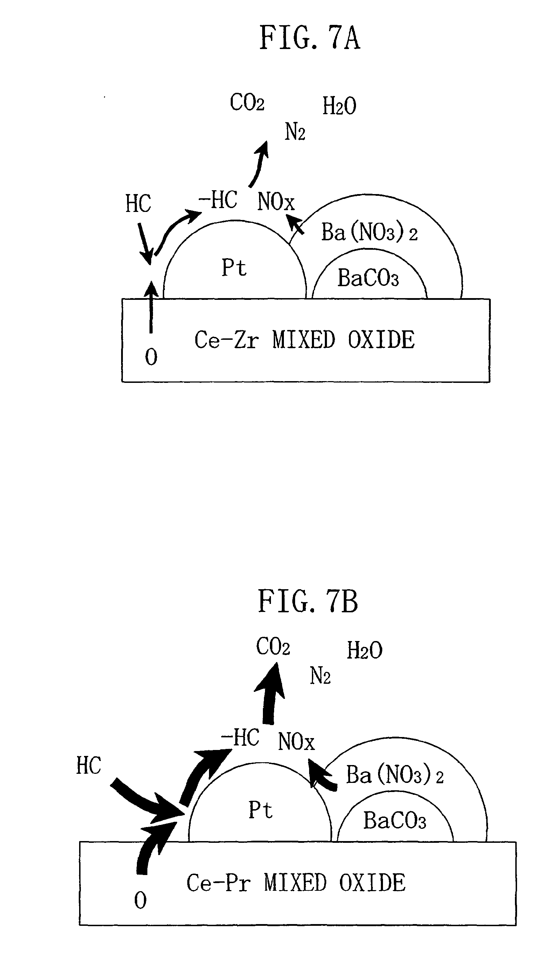

When considering the above results, the following mechanism can be thought of. More specifically, when an air/fuel ratio rich, simulated exhaust gas (Gas Composition *B*) is flowing, oxygen stored in the mixed oxide as an oxygen storage material is released in the form of active oxygen. HC is partially oxidized by the active oxygen, placed in an unsteady state, and then activated. There occurs an oxidation-reduction reaction between the partially-oxidized HC and NOₓ released from the NOₓ absorbent material, wherein NOₓ absorbed in the NOₓ absorbent material is consumed thereby reactivating the NOₓ absorbent material. And, when an air-fuel ratio lean, simulated exhaust gas (Gas Composition A) is flowing, the NOₓ absorbent material newly traps NOₓ for purification. The Example 1 is compared against the Example 3. As shown in Figure **5**, at a catalyst temperature of 350 degrees centigrade, the Example 3 mixed oxide (oxygen storage material) is higher in active oxygen release efficiency than the Example 1 mixed oxide. As indicated by arrows having different thicknesses of Figures **7A** and **7B,** the Example 3 is more active in NOₓ reduction purification based on the aforesaid mechanism, and since the recovering of the NOₓ absorption capability of the NOₓ absorbent material (Ba) is excellent, it is supposed that the Example 3 exhibits also higher lean NOₓ purification rate than the Example 1. Note that BaCO₃ in Figure **7** is formed as follows. That is, NO₂ is released from Ba(NO₃)₂ and replaced with CO₂. "- HC" means a partially oxidized HC.

### EVALUATION TEST 3

The effect of the amount of Ce-Pr mixed oxide exerting upon lean NOₓ purification rate was evaluated.

### TEST CATALYST

### EXAMPLE 5

A catalyst of Example 5 was prepared in the following way.

### FORMING AN INNER COAT LAYER

A γ-alumina, a Ce-Zr mixed oxide serving as an oxygen storage material (whose mass composition ratio is CeO₂ : ZrO₂ = 74 : 26), and an alumina binder were scale measured and then mixed together so that the γ-alumina support amount was 150g/L, the mixed oxide support amount was 150g/L, and the alumina binder support amount was 30g/L. Ion exchange water was added to this mixture to prepare a slurry. A monolith substrate of cordierite was dipped into the slurry and then pulled up. Then, surplus slurry was blown away. In such a way, the slurry was washcoated on the substrate. Next, the slurry was dried and then baked to form an inner coat layer.

### FORMING AN OUTER COAT LAYER

An aqueous solution of dinitrodiammineplatinumnitrate and an aqueous solution of rhodium nitrate were scale measured and then mixed together so that the Pt support amount was 0.5g/L and the Rh support amount was 0.006g/L. This mixture was added to an MFI type zeolite (SiO₂/Al₂O₃ = 80) and a spray dry technique was used to perform evaporation to dryness and further drying and baking were carried out to form Pt-Rh/MFI catalytic powders. The amount of Pt and Rh combined was about 2.5% in mass percentage.

Next, the Pt-Rh/MFI catalytic powders and an alumina binder were scale measured and then mixed together so that the catalytic powder support amount was 20g/L and the binder support amount was 4g/L. Ion exchange water was added to the mixture to prepare a slurry. This slurry was washcoated on the substrate onto which the inner coat layer had been applied and drying and baking were carried out to form an outer coat layer.

### IMPREGNATION STEP

A dinitrodiammineplatinumnitrate aqueous solution, a rhodium acetate aqueous solution, and a barium acetate aqueous solution were scale measured and then mixed together so that the Pt support amount was 6g/L, the Rh support amount was 0.1g/L, and the Ba support amount was 30g/L. In this way, a mixture of these aqueous solutions was prepared.

Next, the mixed solution was impregnated into the inner and outer coat layers of the substrate and drying and baking were carried out.

The impurity amount of the obtained catalyst was below 1%, which was the same as in the following example catalysts.

### EXAMPLE 6

A catalyst of Example 6 was prepared by employing the same conditions and methods as in the Example 5, with the exception that a mixture, prepared by mixing together a Ce-Zr mixed oxide used in the Example 5 and a Ce-Pr mixed oxide (whose mass composition ratio is CeO₂ : Pr₆O₁₁ = 90 : 10) at a mass ratio of Ce-Zr : Ce-Pr = 142.5 : 7.5, was used as an oxygen storage material in the inner coat layer.

### EXAMPLE 7

A catalyst of Example 7 was prepared by employing the same conditions and methods as in Example 6, with the exception that a mixture, prepared by mixing together a Ce-Zr mixed oxide and a Ce-Pr mixed oxide at a mass ratio of Ce-Zr : Ce-Pr = 135 : 15, was used as an oxygen storage material in the inner coat layer.

### EXAMPLE 8

A catalyst of Example 8 was prepared by employing the same conditions and methods as in the Example 6, with the exception that a mixture, prepared by mixing together a Ce-Zr mixed oxide and a Ce-Pr mixed oxide at a mass ratio of Ce-Zr : Ce-Pr = 120 : 30, was used as an oxygen storage material in the inner coat layer.

### EXAMPLE 9

A catalyst of Example 9 was prepared by employing the same conditions and methods as in the Example 6, with the exception that a mixture, prepared by mixing together a Ce-Zr mixed oxide and a Ce-Pr mixed oxide at a mass ratio of Ce-Zr : Ce-Pr = 97.5 : 52.5, was used as an oxygen storage material in the inner coat layer.

### EXAMPLE 10

A catalyst of Example 10 was prepared by employing the same conditions and methods as in the Example 6, with the exception that a mixture, prepared by mixing together a Ce-Zr mixed oxide and a Ce-Pr mixed oxide at a mass ratio of Ce-Zr : Ce-Pr = 75 : 75, was used as an oxygen storage material in the inner coat layer.

### EXAMPLE 11

A catalyst of Example 11 was prepared by employing the same conditions and methods as in the Example 5, with the exception that a Ce-Pr mixed oxide (whose mass composition ratio is CeO₂ : Pr₆O₁₁ = 90 : 10) was used as an oxygen storage material in the inner coat layer.

### EVALUATION METHOD

The same evaluation method as used in the Evaluation Test 1 was employed to measure the lean NOₓ purification rate of each of the catalysts of the Examples 5 through 11. However, in the present Evaluation Test 3, the lean NOₓ purification rate for 130 seconds from the moment there was made a change to lean operation, was also measured for each catalyst.

### RESULTS

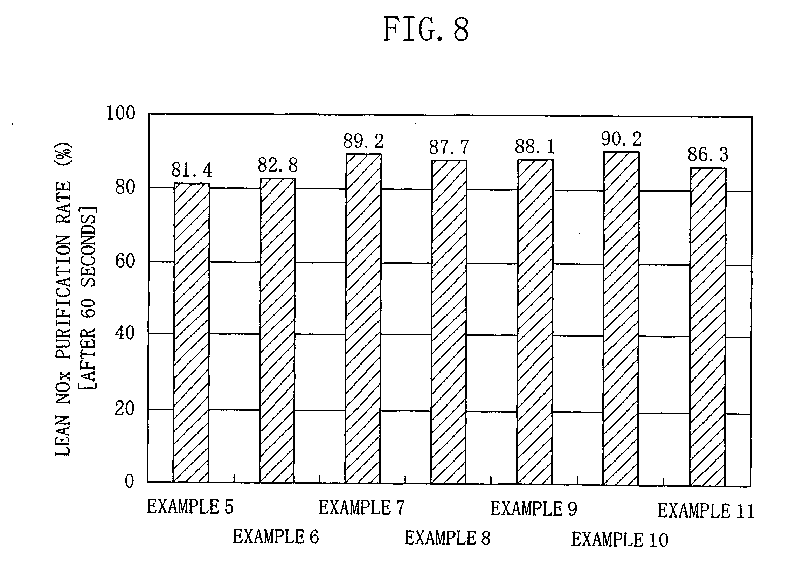

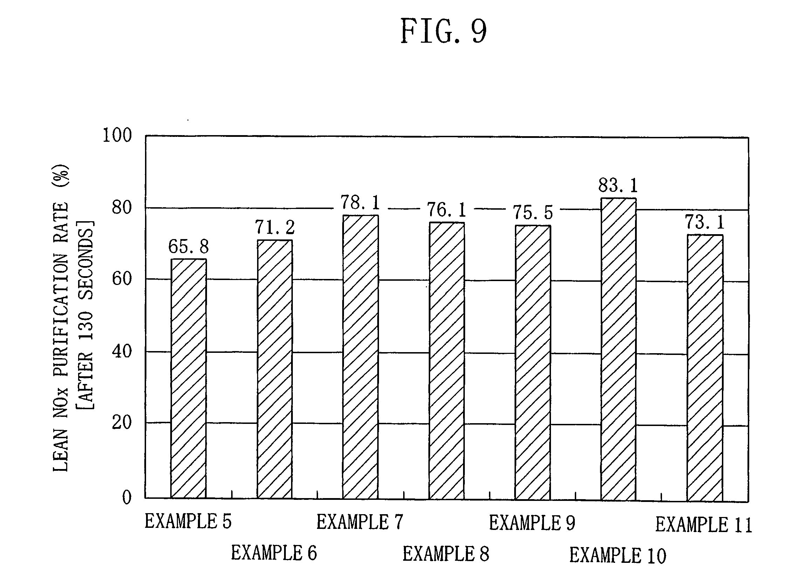

Figure **8** shows the lean NOₓ purification rate of each example catalyst for 60 seconds after the change to lean operation while Figure **9** shows the lean NOₓ purification rate of each example catalyst for 130 seconds after the change to the lean operation.

As shown in Figures **8** and **9**, the Examples 6 through 10 mixedly including therein a Ce-Pr mixed oxide and the Example 11 formed from only a Ce-Pr mixed oxide are higher in lean NOₓ purification rate than the Example 5 whose oxygen storage material was formed from only a Ce-Zr mixed oxide. This backs up the results of the Examples 2 and 4 in the Evaluation Test 2 that, even when Ce-Pr mixed oxide is used as a part of the mixed oxide, it is possible to improve the lean NOₓ purification rate.

Further, as shown in Figure **8,** the Examples 7 through 11 prepared so as to contain a Ce-Pr mixed oxide in an amount of 15g or more per 1L of the substrate exhibit a high lean NOₓ purification rate of 85% or above. Figure **9** shows that, although on the whole the lean NOₓ purification rate becomes lower when compared to Figure **8,** the Examples 7 through 11 remain higher in lean NOₓ purification rate than the Examples 5 and 6. This indicates that, in order to obtain further higher lean NOₓ purification rates, Ce-Pr mixed oxide should be present in an amount of 15g or more per 1L of the substrate.

### EXAMINATION OF NO ABSORPTION MECHANISM

The effect of a Ce-Pr mixed oxide as an oxygen storage material upon the lean NOₓ purification rate was examined from a NO absorption mechanism aspect. That is, how the Ce-Pr mixed oxide worked on the previously explained NO absorption mechanism (1) (consecutive reaction) and the mechanism (2) (reactive intermediate's spillover) was examined.

### EVALUATION TEST 4

There was made comparison in lean NOₓ purification rate as well as in NO → NO₂ conversion rate between a catalyst using a Ce-Pr mixed oxide as an oxygen storage material and another using a Ce-Zr mixed oxide as an oxygen storage material.

### TEST CATALYST

### PREPARATION OF Ce-Pr CATALYST

### FORMATION OF COAT LAYER

A γ-alumina, a Ce-Pr mixed oxide serving as an oxygen storage material (whose mass composition ratio is CeO₂ : Pr₆O₁₁ = 90 : 10), and an alumina binder were scale measured and then mixed together so that the γ-alumina support amount was 150g/L, the mixed oxide support amount was 150g/L, and the alumina binder support amount was 30g/L. Ion exchange water was added to this mixture to prepare a slurry. A monolith substrate of cordierite was dipped into this slurry and then pulled up. Then, surplus slurry was blown away. In such a way, the slurry was washcoated on the substrate. Next, the slurry was dried and then baked to form an inner coat layer.

### IMPREGNATION STEP

A dinitrodiammineplatinumnitrate aqueous solution, a rhodium acetate aqueous solution, a barium acetate aqueous solution, a potassium acetate aqueous solution, a strontium acetate aqueous solution, and a magnesium acetate aqueous solution were scale measured and then mixed together so that the Pt support amount was 6g/L, the Rh support amount was 0.1g/L, and the Ba support amount was 30g/L, the K support amount was 6g/L, the Sr support amount was 10g/L, and the Mg support amount was 10g/L. In this way, a mixture of these aqueous solutions was prepared. This mixed solution was impregnated into the aforesaid coat layer of the substrate and drying and baking were carried out to obtain the Ce-Pr catalyst (1).

Moreover, a Ce-Pr catalyst (2) having the same structure as the Ce-Pr catalyst (2) was prepared, with the exception that any NOₓ absorbent material (Ba, K, Sr, Mg) is not supported.

### PREPARATION OF Ce-Zr CATALYST

A Ce-Zr catalyst (1) with a NOₓ absorbent material and a Ce-Zr catalyst (2) without a NOₓ absorbent material were prepared employing the same conditions and methods as the Ce-Pr catalysts (1) and (2), with the exception that a Ce-Zr mixed oxide (whose mass ratio is CeO₂ : ZrO₂ = 74 : 26) was used as an oxygen storage material.

### EVALUATION METHOD

With respect to the Ce-Pr catalyst (1) and the Ce-Zr catalyst (1), their respective lean NOₓ purification rates ware measured employing the same method as in the Evaluation Test 1. Moreover, the Ce-Pr catalyst (2) and the Ce-Zr catalyst (2) were subjected to heat treatment at 900 degrees centigrade for 24 hours in an atmospheric environment and thereafter attached to a fixed-bed flow reactor. Then, NO gas was let to flow and the rate of NO→NO₂ conversion was measured. The catalyst temperature and the simulated exhaust gas temperature were 350 degrees centigrade and the space velocity SV was 25000 h⁻¹.

### RESULTS

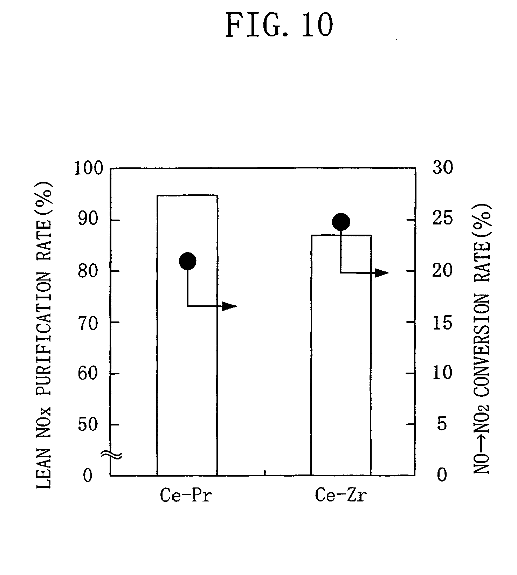

The results are shown in Figure **10**. In this figure, "Ce-Pr" indicates the Ce-Pr catalysts (1) and (2) and "Ce-Zr" indicates the Ce-Zr catalysts (1) and (2). As can be seen from Figure **10,** although the catalysts using a Ce-Pr mixed oxide as an oxygen storage material are higher in lean NOₓ purification rate than those using a Ce-Zr mixed oxide as an oxygen storage material, the former catalysts are lower in NO→NO₂ conversion rate than the latter catalysts.

The above proves that the increase in lean NOₓ purification rate when using a Ce-Pr mixed oxide as an oxygen storage material is not because the progress of the NO→NO₂ conversion reaction of the formula (1)-1 is facilitated. Accordingly, with respect to the catalysts using a Ce-Pr mixed oxide, not only the aforesaid mechanism (1) (consecutive reaction) but also another mechanism (i.e., the mechanism (2) (reactive intermediate's spillover) must be thought of as a NO absorption mechanism.

### EVALUATION TEST 5

The Ce-Pr catalyst (1) using a Ce-Pr mixed oxide as an oxygen storage material and the Ce-Zr catalyst (1) using a Ce-Zr mixed oxide as an oxygen storage material were subjected to heat treatment at 900 degrees centigrade for 24 hours in an atmospheric environment and thereafter attached to a fixed-bed flow reactor. Then, NO₂ gas was let to flow and their respective NO₂ purification rates (NO₂ absorption rates) were measured. The catalyst temperature and the simulated exhaust gas temperature were 350 degrees centigrade and the space velocity *SV* was 25000 h⁻¹.

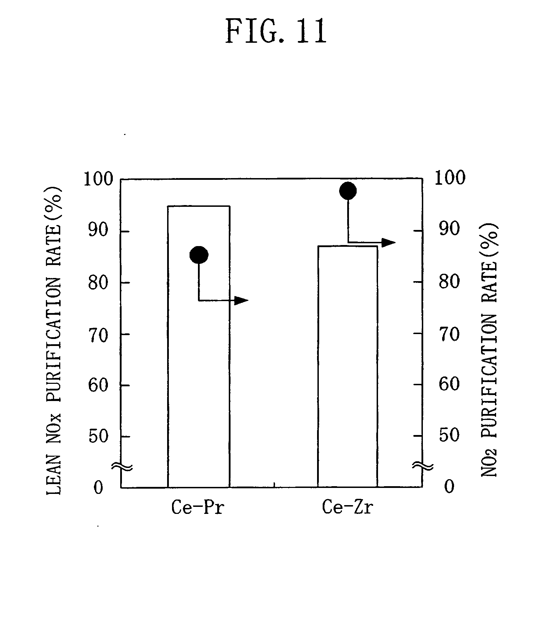

The results are shown, together with the lean NOₓ purification rate measurement results of the Evaluation Test 4, in Figure **11**. In Figures **11**, **13**, and **16**, "Ce-Pr" denotes the Ce-Pr catalyst (1) and "Ce-Zr" denotes the Ce-Zr catalyst (1).

As can be seen from Figure **11**, the catalyst using a Ce-Pr mixed oxide is lower in NO₂ purification rate than the catalyst using a Ce-Zr mixed oxide. This proves that the increase in lean NOₓ purification rate when using a Ce-Pr mixed oxide as an oxygen storage material is not because the progress of the NO₂ absorption reaction of the formula (1)-2 is facilitated. Accordingly, also from the NO₂ purification rate results, for the catalyst using a Ce-Pr mixed oxide, not only the aforesaid mechanism (1) (consecutive reaction) but also another mechanism (i.e., the mechanism (2) (reactive intermediate's spillover) must be thought of as a NO absorption mechanism.

### EVALUATION TEST 6

How the presence ratio of NO and NO₂ was influenced by temperature was studied. That is, a gas of NO₂ (100%) was introduced into an evaluation apparatus, and in the absence of a catalyst the temperature of a gas flowpath was simply set at 250, at 350, and at 450 degrees centigrade. The NO₂ concentration level and the NO concentration level of the gases exposed to the different gas flowpath temperatures were measured and the ratio of the NO concentration against the NOₓ (NO₂ + NO) concentration was found.

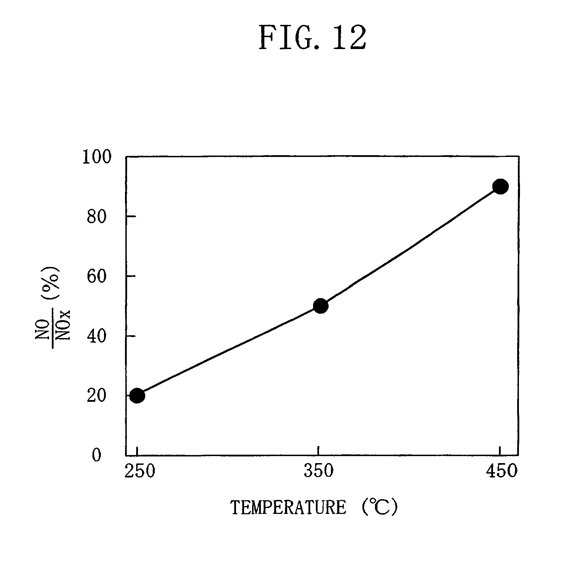

The results are as shown in Figure **12.** On the low temperature side, the presence ratio of NO₂ is high; however, as the gas flowpath temperature increases, especially when increasing above 350 degrees centigrade, the presence ratio of NO becomes higher. This proves that on the high temperature side NOₓ absorption by the mechanism (1) is not easily done, in other words, the mechanism (2) becomes advantageous for NOₓ absorption.

### EVALUATION TEST 7

With respect to the Ce-Pr catalyst (1) using a Ce-Pr mixed oxide as an oxygen storage material and the Ce-Zr catalyst (1) using a Ce-Zr mixed oxide as an oxygen storage material, their respective lean NOₓ purification rates at various temperatures were measured by the same method as in the Evaluation Test 1.

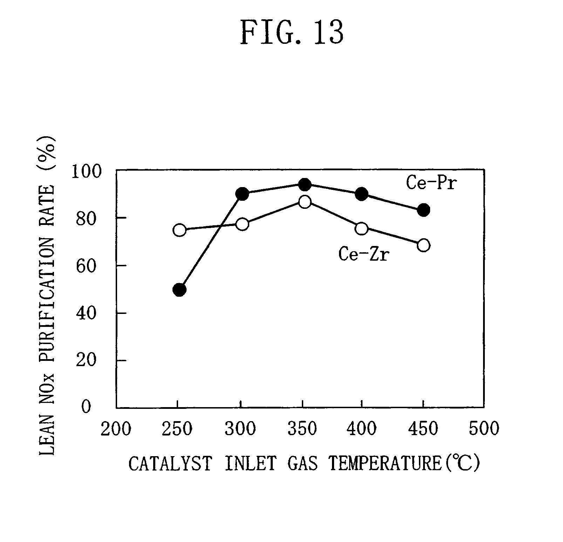

The results are shown in Figure **13**. Figure **13** shows that on the high temperature side in excess of 300 degrees centigrade the Ce-Pr catalyst using a Ce-Pr mixed oxide is higher in NOₓ purification rate than the Ce-Zr catalyst using a Ce-Zr mixed oxide.

The results of the Evaluation Tests 4 through 7 suggest that, although the mechanism (1) possibly involves NO absorption in the Ce-Pr catalyst (1) using a Ce-Pr mixed oxide, another mechanism (the mechanism (2)) also involves such NO absorption.

### EVALUATION TEST 8

In the NO absorption mechanism (2), it is necessary to consider the spillover of the reactive intermediate NO₂^{δ-} to the NOₓ absorbent material. Therefore the effect of Ce-Pr and Ce-Zr mixed oxides as oxygen storage materials upon the ionization potential of Ba (i.e., Ba as a constitutive atom of barium carbonate) as a NOₓ absorbent material, was studied.

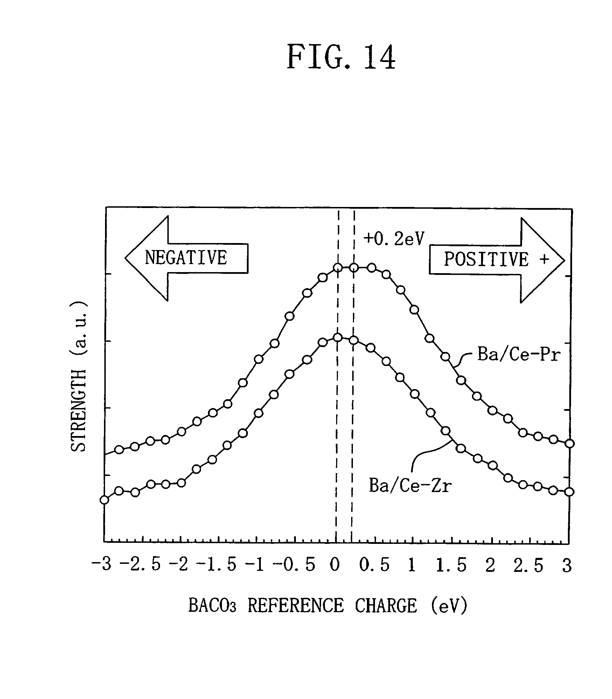

More specifically, Ba/Ce-Pr as a result of supporting BaCO₃ on a Ce-Pr mixed oxide and Ba/Ce-Zr as a result of supporting BaCO₃ on a Ce-Zr mixed oxide were prepared and their respective Ba-atom ionization potentials were measured by x-ray photoelectron spectroscopy (XPS). The equipment used was an ESCA 5600Ci manufactured by PHI. The results are shown in Figure **14** wherein the Ba-atom ionization potential of BaCO₃ when existing alone was used as a reference value, i.e., 0 eV.

As can be seen from the figure, in the Ba/Ce-Zr, the strength peak value approximately agrees with the reference value. However, in the Ba/Ce-Pr, the peak value is deviated toward "positive +" by + 0.2 eV. That is, if BaCO₃ is supported on a Ce-Pr mixed oxide, this enhances the Ba-atom ionization potential. This means that the degree, at which Ba-atoms are charged positively, increases.

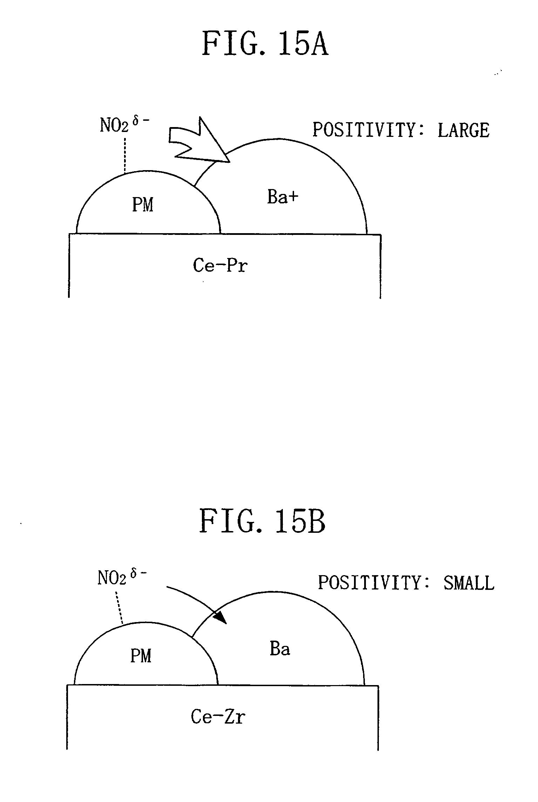

Accordingly, as the ease of spillover is indicated by different arrow thickness in Figure **15**, the Ba positive charge degree of the Ba/Ce-Pr (Figure **15A**) is higher than that of the Ba/Ce-Zr (Figure **15B**), thereby facilitating spillover of the reactive intermediate NO₂^{δ-} from on the precious metal (PM) onto Ba which is a NOₓ absorbent material. That is, it can be said that the use of a Ce-Pr mixed oxide as an oxygen storage material facilitates NO absorption by the mechanism (2).

### EVALUATION TEST 9

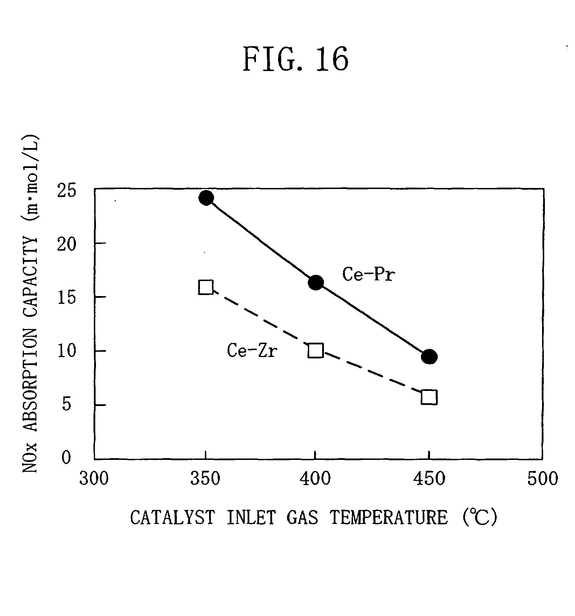

Further, with respect to the Ce-Pr catalyst (2) using a Ce-Pr mixed oxide as an oxygen storage material and the Ce-Zr catalyst (2) using a Ce-Zr mixed oxide as an oxygen storage material, their temperature characteristics for NO absorption capacity were studied. The results are shown in Figure **16**. As can be seen from the figure, at a temperature range from 350 to 450 degrees centigrade, the former (i.e., the Ce-Pr catalyst (2) using a Ce-Pr mixed oxide as an oxygen storage material) has a larger NO absorption capacity than the latter catalyst. Accordingly, this result also backs up the fact that, when using a Ce-Pr mixed oxide as an oxygen storage material, not only NO absorption by the mechanism (1) but also NO absorption by the mechanism (2) works intensively.

## Claims

1. Exhaust gas purification catalyst comprising
a) a NOₓ absorbent material,
b) a precious metal, and
c) a Ce-Pr mixed oxide
**characterized in that**
said Ce-Pr mixed oxide is present in amounts ranging from 15 g to 300 g per 1l of a substrate, and
at least a part of said NOₓ absorbent material is supported on said Ce-Pr mixed oxide.

2. Exhaust gas purification catalyst according to claim 1, **characterized in that** said NOₓ absorbent material is formed of at least one of Ba, K, Sr and Mg.

## Patentansprüche

1. Katalysator zur Abgasreinigung, umfassend
a) ein NOx-absorbierendes Material,
b) ein Edelmetall und
c) ein Ce-Pr-Mischoxid
**dadurch gekennzeichnet, dass**
das Ce-Pr-Mischoxid in Mengen von 15 g bis 300 g pro 1 l eines Substrats vorhanden ist und
zumindest ein Teil des NOx-absorbierenden Materials auf dem Ce-Pr-Mischoxid gehalten wird.

2. Katalysator zur Abgasreinigung nach Anspruch 1, **dadurch gekennzeichnet, dass** das NOx-absorbierende Material aus zumindest einem der Elemente Ba, K, Sr und Mg gebildet wird.

## Revendications

1. Catalyseur pour la purification de gaz d'échappement, comprenant
a) un matériau absorbant du NOx,
b) un métal précieux, et
c) un oxyde mixte de Ce et de Pr
**caractérisé en ce que**
ledit oxyde mixte de Ce et de Pr est présent dans des quantités comprises entre 15 g et 300 g par 1 l d'un substrat, et
au moins une partie dudit matériau absorbant du NOx est supportée en dessus dudit oxyde mixte de Ce et de Pr.

2. Catalyseur pour la purification de gaz d'échappement selon la revendication 1, **caractérisé en ce que** ledit matériau absorbant du NOx est formé par au moins l'un des éléments Ba, K, Sr et Mg.
